# FASCICULE DE BREVET EUROPEEN

(11) **EP 3 055 386 B1**
(45) Date de publication et mention de la délivrance du brevet: **09.05.2018**
(21) Numéro de dépôt: 14792601.8
(22) Date de dépôt: 29.09.2014
(51) Int. Cl.: C10G 9/00, C10K 1/04, C10J 3/54, F28D 21/00, F28G 9/00, F28G 11/00, F28D 7/16, C10K 3/00, C10J 3/00, B01D 53/00, C10J 3/84

(54) **PROCEDE ET SYSTEME DE PURIFICATION D'UN GAZ DE SYNTHESE BRUT ISSU D'UNE PYROLYSE ET/OU GAZEIFICATION D'UNE CHARGE DE MATIERE CARBONEE PAR DESTRUCTION DE GOUDRONS CONTENUS DANS LE GAZ**
VERFAHREN UND ANLAGE ZUR REINIGUNG EINES SYNTHESEROHGASES AUS DER PYROLYSE UND/ODER VERGASUNG EINER KARBONISIERTEN MATERIALLADUNG DURCH ZERSTÖRUNG VON TEER IN DEM GAS
METHOD AND SYSTEM FOR PURIFYING A RAW SYNTHESIS GAS ORIGINATING FROM THE PYROLYSIS AND/OR GASIFICATION OF A CARBONIZED MATERIAL CHARGE BY DESTRUCTION OF TARS CONTAINED IN THE GAS

(30) Priorité: 09.10.2013 FR 1359790
(43) Date de publication de la demande: 17.08.2016
(73) Titulaire: Commissariat à l'Énergie Atomique et aux Énergies Alternatives, 75015 Paris (FR)
(72) Inventeur: HAARLEMMER, Geert, 38330 Montbonnot Saint Martin (FR); CASTELLI, Pierre, 38330 Saint Nazaire Les Eymes (FR)
(74) Mandataire: Nony
(86) Numéro de dépôt international: PCT/IB2014/064924
(87) Numéro de publication internationale: WO 2015/052614

(56) Documents cités:
- DE-T1- 4 292 695
- FR-A1- 2 080 704
- FR-A1- 2 490 317
- FR-A1- 2 502 316
- US-A- 4 247 530
- US-A- 4 420 343
- US-A1- 2007 007 175
- US-A1- 2013 220 373

## Description

### Domaine technique

La présente invention concerne un procédé de purification d'un gaz de synthèse brut issu d'une pyrolyse et/ou d'une gazéification d'une charge de matière carbonée par destruction d'au moins une partie de goudrons contenus dans le gaz.

Par « charge de matière carbonée », on entend toute matière contenant une quantité de carbone, en particulier toute matière carbonée de résidus, telle que charbon, pet coke, biomasse, déchets organiques, tels que des boues, déchets de matière plastique....

Par « goudron », on entend l'ensemble des produits organiques de type hydrocarbures condensables complexes produits lors d'un traitement thermique par pyrolyse ou gazéification, incluant des composés à un ou plusieurs cycles aromatiques appelé HAP (naphtalène, phénanthrène, anthracène, pyrène....).

Par « gaz de synthèse brut », on entend le gaz de synthèse obtenu directement en sortie d'un réacteur de gazéification (gazéifieur) ou d'un réacteur de pyrolyse, et comprenant majoritairement des gaz CO, CO₂, H₂, CH₄ avec une part plus ou moins importante de composés hydrocarbonés sous forme gazeuse dont au moins des goudrons, résultant d'une oxydation incomplète de la matière carbonée et le cas échéant des composés minoritaires inorganiques (NH₃, HCl, HF, HCN, H₂S, COS, métaux alcalins...) à l'état de vapeur provenant de la matière carbonée ou de l'(des) agent(s) gazéifiant(s).

L'invention vise à enlever une partie substantielle des goudrons condensables présents dans le gaz de synthèse brut issu d'une pyrolyse ou d'une gazéification d'une charge de matière carbonée, et ce en vue de rendre le gaz de synthèse ainsi dépourvu des goudrons apte à être utilisé dans des applications contraignantes.

Parmi ces applications contraignantes, on peut citer toutes celles où le gaz de synthèse subit une combustion pour apporter de l'énergie mécanique ou sous forme de chaleur, telles que dans des brûleurs, des turbines à gaz, des moteurs à combustion...

### Etat de la technique

La gazéification de la biomasse et du charbon est connue depuis longtemps. De manière générale, on peut la définir comme une transformation thermochimique de la biomasse ou du charbon par l'action de la chaleur en présence d'agent(s) gazéifiant(s). On cherche à générer, à l'issue de la gazéification, un mélange de gaz brut dit gaz de synthèse (« synthesis gas » or « syngas » en anglais) qui comprend des gaz valorisables comme par exemple du monoxyde de carbone et de l'hydrogène (CO+H₂).

Ainsi, la gazéification est une réaction endothermique entre la matière carbonée et l'(les) agent(s) gazéifiant(s) selon les réactions chimiques suivantes :

C + H₂O → CO + H₂ (1)

C + CO₂ → 2 CO (2)

Le gaz de synthèse brut produit est majoritairement constitué des gaz CO, CO₂, H₂. Il contient également des composés organiques minoritaires (CH₄, C₂H₆, C₃H₈...) et des composés inorganiques minoritaires (NH₃, HCl, HF, HCN, H₂S, COS, métaux alcalins...) à l'état de vapeur provenant de la matière carbonée ou de l'(des) agent(s) gazéifiant(s). Enfin, pour des gazéifications à basse température (850°C), on obtient une part plus ou moins importante de composés hydrocarbonés sous forme gazeuse (goudrons, CH₄), résultant d'une oxydation incomplète de la matière carbonée.

Ainsi, par exemple, les procédés de gazéification de la biomasse ligno-cellulosique convertissent le carbone de la biomasse avec un gaz brut en sortie du gazéifieur avec une composition moyenne de 20-25 % en CO, 8-12 % en CH₄, 18-22 % en CO₂ et environ 38-42 % en H₂ et, des composés organiques C₂ à C₁₆ plus des composés inorganiques

La pyrolyse de la biomasse est la décomposition thermique des matières organiques carbonées en l'absence d'oxygène ou en atmosphère pauvre en oxygène. Elle peut débuter à un niveau de température relativement bas, typiquement à partir de 300°C, et se poursuit jusqu'à 1 000°C environ. Un gaz de synthèse brut, souvent appelé gaz de pyrolyse, est également produit par la pyrolyse. La pyrolyse peut également être réalisée simultanément avec la gazéification (procédé dit de pyro-gazéification).

La purification d'un gaz de synthèse brut issu d'une pyrolyse et/ou gazéification par destruction des goudrons qu'il contient fait l'objet de nombreuses études, car elle constitue un des obstacles principaux pour la valorisation du gaz par la suite. En effet, pour la plupart des applications requises une purification minimale doit être effectuée.

En particulier, dans les applications contraignantes où le gaz produit doit subir une combustion afin d'apporter de l'énergie sous forme de chaleur et/ou mécanique, telle que dans une turbine à gaz, un moteur à combustion ou tout type de brûleur, les goudrons ne doivent pas se condenser dans les différents composants, en particulier en aval dans les lignes de transfert. Autrement dit, ils doivent être supprimés au maximum avant la combustion pour éviter la formation des suies: en effet, les goudrons aromatiques sont précurseurs de suies formées lors de la combustion.

La méthode de purification intrinsèquement la plus efficace consiste à élever la température du gaz brut à une température élevée. Ainsi, il a déjà été éprouvé une torche à plasma [1], une injection d'air ou d'oxygène ou bien un réacteur de gazéification à flux entrainé (EFR, acronyme anglais de « *Entrained flow reactor* ») fonctionnant à haute température de préférence à des températures comprises typiquement entre 1400-1600°C [2]. Selon cette méthode, la quasi-totalité des goudrons peut être détruite par craquage thermique. En revanche, les solutions technologiques mettant en oeuvre cette méthode sont coûteuses, consomment de l'énergie et sont techniquement difficiles à mettre en oeuvre.

De nombreuses autres méthodes existent dans la littérature. Un lavage à huile ou l'eau fonctionne : [3] et [4]. Mais, le solvant utilisé doit alors être ajusté aux goudrons, et l'eau est de moindre efficacité contre les goudrons légers et apolaires.

L'adsorption sur un solide fonctionne [5]. Mais, le solide se sature rapidement. En dernier lieu, on peut citer le craquage catalytique [6] qui fait passer le gaz de synthèse ou de pyrolyse sur des catalyseurs solides pour reformer les goudrons.

De manière générale, l'ensemble des méthodes connues pour la purification d'un gaz de synthèse brut issu de la gazéification de biomasse est décrit dans la publication [7].

Le brevet US 6077490A divulgue un système de filtrage de gaz de synthèse brut (« syngas »). Les suies contenues dans le syngas sont enlevées par un filtre en céramique. Une fois le filtre saturé par les suies, il est remplacé par un autre filtre. Les filtres divulgués se limitent à la capture des poussières présentes dans le syngas.

La demande de brevet CN201575732 décrit la production de goudrons de houille par la mise en oeuvre d'un échangeur de chaleur à tubes et à calandre dont l'agencement à l'intérieur de la calandre délimite des chicanes adaptées pour condenser les goudrons de houille et pour évacuer en continu ces condensats sous forme d'huile en sortie par le gaz en partie basse de l'échangeur,
DE4292695 divulgue un appareil où on procède à l'enlèvement, par combustion, du coke précipité ("Entkoken") sur la surface externe des tubes.

Il existe donc un besoin pour améliorer les procédés de purification de gaz de synthèse brut issu d'une pyrolyse et/ou d'une gazéification d'une charge de matière carbonée par destruction d'au moins une partie des goudrons contenus dans le gaz, notamment en vue d'en permettre au gaz dépourvu de goudrons d'être utilisé dans des applications en aval, sans maintenance supplémentaire et/ou investissement dans des systèmes de purification supplémentaire

Le but général de l'invention est de répondre en partie à ce besoin.

Un but particulier est de proposer un procédé de purification qui réponde au but général et en outre qui puisse être réalisé sans introduire de discontinuité dans un procédé de conversion thermochimique par pyrolyse et/ou gazéification d'une charge de matière carbonée.

### Exposé de l'invention

Pour ce faire, l'invention a pour objet un procédé de purification d'un gaz de synthèse brut issu d'une pyrolyse et/ou d'une gazéification d'une charge de matière carbonée par destruction d'au moins une partie des goudrons contenus dans le gaz, selon la revendication 1. Par « échangeur de chaleur à tubes et à calandre », on entend ici et dans le cadre de l'invention, le sens technologique usuel, c'est-à-dire un appareil d'échange de chaleur entre deux fluides constitué d'un faisceau de tubes, disposés à l'intérieur d'une enceinte étanche dénommée calandre. Un des fluides circule à l'intérieur des tubes et un autre des fluides à l'intérieur de la calandre, autour des tubes. Un tel appareil peut comporter des chicanes à l'intérieur de la calandre, dont la fonction est de créer des turbulences et ainsi améliorer le transfert de chaleur à l'extérieur des tubes. Le faisceau de tubes peut être constitué de tubes droits ou cintrés en forme de U ou en forme d'hélice et fixé sur des plaques percées à l'intérieur de la calandre.

Par « surfaces internes à la calandre », on entend ici et dans le cadre de l'invention la paroi internes de la calandre et les parois externes des tubes formant le faisceau à l'intérieur de la calandre.

Selon l'invention, le gaz entrant dans la calandre est le fluide à refroidir pour obtenir la condensation, appelé usuellement fluide primaire et le fluide, tel que l'eau ou de la vapeur d'eau, entrant dans les tubes est le fluide de refroidissement, appelé usuellement fluide secondaire.

Le fluide de refroidissement circulant dans le faisceau de tubes selon l'étape a/ est de préférence de l'eau. Le débit d'eau est de préférence asservi à la température de sortie du gaz de synthèse.

Ainsi, l'invention consiste tout d'abord à faire passer le gaz de synthèse brut, chaud, riche en vapeur de goudrons dans la calandre d'un échangeur de chaleur, et de le refroidir par un circuit d'eau ou de vapeur d'eau introduit dans le faisceau de tubes. Pendant le refroidissement, les goudrons se condensent en grande partie sur les surfaces internes à la calandre, qui sont les surfaces froides de l'échangeur. Par le phénomène connu de thermophorèse, les goudrons présents pour une partie sous forme d'aérosols, c'est-à-dire sous la forme de fines particules, ont en effet tendance à migrer vers une paroi froide à travers un gradient de température, tels que les tubes dans l'échangeur.

La vapeur d'eau contenue dans le gaz brut est également condensée ainsi qu'une partie des cendres volatiles (chlorure de potassium (KCl), métaux lourds et autres).

Ensuite, un gaz de combustion est admis à l'intérieur de la calandre de l'échangeur pour déclencher une combustion des gaz puis de la partie des goudrons condensées.

Le gaz de pyrolyse entre dans l'enceinte (calandre) de l'échangeur à une température avantageusement comprise entre 100 et 300°C, de préférence entre 200 et 300°C. Il ne doit pas être trop froid pour empêcher la condensation des goudrons. Ce gaz peut typiquement contenir 5 à 100 g/Nm³ de goudrons.

L'eau de refroidissement qui circule dans les tubes de l'échangeur, a une température avantageusement comprise entre 10 et 90°C, de préférence entre 10 et 30°C.

Le gaz de pyrolyse qui sort de l'enceinte de l'échangeur a une température comprise de préférence dans la gamme de 10 à 100°C, de préférence encore de 15 à 50°C, vois 15-30°C encore mieux.

L'abattement que l'on peut obtenir, c'est-à-dire le pourcentage de goudrons retiré par condensation, dépend de la quantité de goudrons à l'entrée et de la température. Les inventeurs pensent pouvoir que l'on peut obtenir un abattement dans une gamme de 50 à 99%. Typiquement, un pourcentage de goudrons retiré par condensation de l'ordre de 99% correspond à un gaz de pyrolyse en entrée assez chargé en goudrons, et une température de gaz à la sortie assez basse.

Selon l'invention, l'arrêt c/ est provoqué par une mesure de la perte de charge du gaz entre l'entrée et la sortie de la calandre au-dessus d'une valeur seuil prédéterminée.

La régénération d/ comporte de préférence une étape de vidange, de préférence par gravité, de l'eau contenant le cas échéant des cendres solubles, et accumulée lors de la condensation dans la calandre. Ainsi, l'eau accumulée est purgée, évacuant une partie des cendres solubles, ce qui facilite la combustion selon l'étape d1/. Pour éviter le voyage d'une partie des tubes de l'échangeur par la condensation de la vapeur d'eau contenu dans le gaz à traiter, une purge de l'eau accumulée peut être actionnée automatiquement en fonction du niveau d'eau mesuré.

Selon un mode de réalisation avantageux, la régénération d/ comporte une étape d'1/ d'introduction d'un gaz comburant dans la calandre au préalable de la combustion d1/.

Le gaz comburant peut comporter de l'air et/ou du gaz brut issu de la pyrolyse ou de la gazéification.

La combustion d1/ est de préférence déclenchée par une mise à feu. La mise à feu peut être obtenue par la mise en oeuvre d'une résistance ou d'un arc électrique. On veille à ce que la quantité d'air initiale reste très faible pour éviter une explosion puis elle est augmentée une fois la combustion déclenchée.

Selon une variante avantageuse, la mise à feu est réalisée par un chauffage depuis l'extérieur de la calandre.

De préférence, la régénération d/ comporte une étape d2/ de mesure du taux de CO₂ présent dans les gaz issus de la combustion d1/ à la sortie de la calandre, avec arrêt de la combustion d1/ lorsque le taux de CO₂ mesure est inférieur à une valeur seuil prédéterminée. Ainsi, la mesure du CO₂ dans les fumées de combustion permet d'établir l'état d'avancement de la régénération.

Selon un mode de réalisation avantageux, l'échangeur de chaleur est de type à contre-courant, c'est-à-dire qu'au sein de l'échangeur le flux de gaz de synthèse circulant dans la calandre et celui circulant dans les tubes ont des sens opposés. On améliore d'autant la condensation des goudrons recherchée.

Selon une variante avantageuse, la régénération d/ comportant une étape d3/ de nettoyage à l'eau de l'intérieur de la calandre après la combustion d1/. Ainsi, un remplissage et un lavage à l'eau facilitent l'évacuation des cendres restantes.

Le procédé comporte avantageusement une étape e/ de récupération, à la sortie de l'échangeur, de la chaleur émise par le fluide circulant dans les tubes pendant la condensation a/.

De même, il comporte avantageusement une étape f/ de récupération, à la sortie de l'échangeur, de la chaleur émise par le fluide circulant dans les tubes pendant la combustion d1/.

Selon un mode de réalisation avantageux, le procédé est réalisé en continu par mise en oeuvre des étapes a/ à d/ dans chacun de deux échangeurs à tubes et à calandre à partir d'un même gaz brut, avec des étapes a/ et b/ réalisées dans l'un des deux échangeurs à tubes pendant qu'une étape d/ est réalisée dans l'autre des deux échangeurs et vice-versa.

L'invention concerne également un procédé de conversion thermochimique d'une charge de matière carbonée par pyrolyse ou gazéification, comportant une étape de purification du gaz brut de synthèse issu de la pyrolyse ou la gazéification conformément au procédé qui vient d'être décrit.

Dans ce procédé de conversion, de l'eau chaude ou de la vapeur d'eau récupérée en sortie des tubes d'échangeur est avantageusement valorisée dans une autre étape du procédé de conversion.

Selon un mode de réalisation avantageux, le gaz dépourvu de la partie des goudrons condensée, récupéré selon l'étape b/ est injecté dans la charge de matière carbonée avant la pyrolyse ou la gazéification. En effet, après la condensation des goudrons conformément au procédé de purification selon l'invention, il se peut qu'il reste encore des goudrons mais, aussi des aromatiques comme le benzène, le toluène et le phénol dans le gaz de synthèse en sortie d'échangeur. Leur teneur restante correspond à la pression partielle à la température de condensation, et dépend de la composition chimique des goudrons. Ainsi, en injectant le gaz dans la charge de matière carbonée, la partie restante des goudrons condensables est avantageusement adsorbée par les particules solides constituées par la charge de matière carbonée, telle que la biomasse. En outre, le passage du gaz dépourvu des goudrons condensés, peut servir avantageusement à faire un dernier séchage de la charge de matière carbonée, telle que la biomasse. Et par là, on peut augmenter le rendement du gazéifieur ou du réacteur de pyrolyse.

L'invention concerne également une système selon la revendication 11. Selon une variante avantageuse, les moyens de déclenchement d'une combustion comprennent des moyens de chauffage de l'extérieur de la calandre.

Le système peut comprendre, des moyens pour arrêter la combustion dans la calandre d'échangeur en réponse à une différence de pression mesurée entre l'entrée et la sortie, supérieure à une valeur seuil prédéterminée.

On peut prévoir un capteur de pression en entrée et un capteur de pression en sortie de calandre d'échangeur. Alternativement, et de préférence, on peut prévoir un seul capteur de pression différentielle.

Il peut également comprendre avantageusement des moyens de nettoyage à l'eau de la calandre de chaque échangeur.

Le système peut encore comprendre au moins un capteur de mesure du CO2 en sortie d'une calandre d'échangeur.

L'invention a enfin pour objet une installation de conversion thermochimique d'une charge de matière carbonée comportant :
- un gazéifieur ou un réacteur de pyrolyse,
- un système qui vient d'être décrit, l'entrée de la calandre de chaque échangeur étant reliée à la sortie du gazéifieur ou du réacteur de pyrolyse.

### Description détaillée

D'autres avantages et caractéristiques de l'invention ressortiront mieux à la lecture de la description détaillée de l'invention faite à titre illustratif et non limitatif en référence aux figures suivantes parmi lesquelles:
- la figure 1 est une vue schématique du principe d'un échangeur de chaleur à tubes et à calandre au moyen duquel est mis en oeuvre le procédé de purification du gaz de synthèse brut selon l'invention;
- la figure 2 est une vue schématique du principe d'un système à deux échangeurs à tubes et à calandre mettant en oeuvre en continu le procédé de purification du gaz de synthèse brut selon l'invention.

Dans l'ensemble de la demande et en particulier dans la description qui va suivre les termes « entrée », « sortie » « amont », « aval », sont utilisés par référence avec la direction de transfert du gaz de synthèse brut dans un échangeur de chaleur à tubes et à calandre mettant en oeuvre le procédé selon l'invention.

Les termes « supérieur » , « médian » et « inférieur » » sont utilisés par référence à la configuration installée à l'horizontal d'un échangeur de chaleur à tubes et à calandre mettant en oeuvre le procédé selon l'invention. Une configuration avec des échangeurs placés verticalement est également possible. Dans une telle configuration, les purges de l'eau sont localisées dans la partie basse et le soutirage de gaz est fait sur un côté latéral.

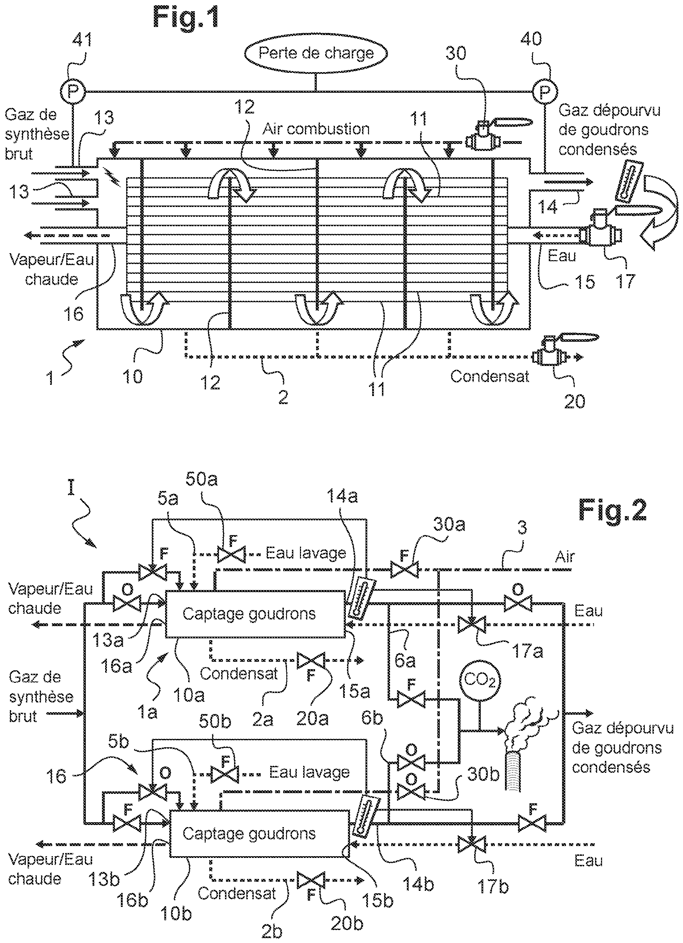

On précise que les légendes données en figures 1 et 2, et en particulier les vannes et lignes de fluides indiquées ne le sont qu'à titre d'exemple non limitatif.

On précise également que sur la figure 2, les vannes avec le symbole F sont fermées, les vannes avec le symbole O sont ouvertes. La phase de purge du condensat et le lavage éventuel d'une calandre 10 d'échangeur 1 ne sont pas montrées, les vannes d'alimentation en eau sont indiquées. Les vannes placées en dérivation (ou by-pass) avec l'entrée 13 du gaz à purifier permettent d'admettre une petite quantité de gaz de pyrolyse dans l'échangeur pour démarrer la combustion des goudrons selon l'invention. Une fois la combustion initiée, ces vannes en dérivation peuvent être fermées, la combustion est entretenue par la combustion des goudrons.

On précise enfin que sur la figure 2, on n'a pas représenté les autres composants d'une installation de conversion thermochimique en continu, qui intègre le système de purification selon l'invention représenté.

A titre d'exemple, cette installation comporte un réacteur pyrolyse et/ou un réacteur de gazéification ou gazéifieur, de type à lit fluidisé circulant (FICFB, acronyme anglais pour « *Fast Internal Circulating Fluidised Bed* ») qui est alimenté en continu à son entrée par exemple par des déchets organique, tels que des boues, depuis un réservoir de stockage. Le réacteur à lit fluidisé peut fonctionner de préférence entre 800 et 950°C.

Le gazéifieur peut être également alimenté à son entrée par des agents gazéifiant, par exemple de l'air ou de l'oxygène.

A la sortie du réacteur de gazéification ou de pyrolyse, un mélange brut de gaz de synthèse comprenant pour les espèces majoritaires du CO, CO₂, H₂O et H₂ et des goudrons est émis.

Le mélange de gaz de synthèse brut est alors injecté en entrée 13a ou 13b d'un échangeur de chaleur 1a ou 1b comme décrit ci-après.

Dans l'exemple illustré, les échangeurs à tubes et calandre 1, 1a, 1b selon l'invention sont des échangeurs de chaleur dans lesquels un faisceau de tubes droits 11 est fixé sur des plaques percées 12 et disposé à l'intérieur d'une enceinte étanche dénommée calandre 10.

Chaque calandre 10 d'échangeur 1, 1a, 1b comporte dans sa partie supérieure une entrée 13, 13a, 13b par laquelle le gaz de synthèse à purifier est introduit, et une sortie 14, 14a, 14b par laquelle le gaz de synthèse dépourvu de sa partie de goudrons condensée selon l'invention est évacué.

Le faisceau de tubes 11 d'échangeur 1, 1a, 1b comporte dans sa partie médiane une entrée 15, 15a, 15b par laquelle l'eau de refroidissement est introduite, et une sortie 16, 16a, 16b par laquelle l'eau réchauffée ou de la vapeur d'eau est évacuée. Une vanne 17, 17a, 17b peut être agencée en amont de l'entrée de l'eau de refroidissement pour réguler avantageusement le débit en fonction de la température de sortie des fumées lors de l'étape de combustion du procédé. Ainsi, comme schématisé avec le symbole de thermomètre en figure 2, il est possible d'avoir soit une admission de gaz de pyrolyse ou de gazéification pour augmenter la combustion si les fumées ne sont pas assez chaudes, soit un refroidissement par une augmentation du débit d'eau dans les tubes si elles sont trop chaudes.

Comme illustré à l'aide des flèches, l'agencement des plaques percées 12 forme des chicanes de circulation du gaz à l'intérieur de la calandre 10. L'échangeur 1, 1a, 1b est de type à contre-courant entre le flux de gaz dans la calandre 10 et l'eau circulant dans les tubes 11.

Une ligne 2, 2a, 2b dans la partie inférieure de la calandre 10 d'un échangeur 1, 1a, 1b comportant une vanne 20, 20a, 20b permet de récupérer les condensats dans la calandre par gravité.

Une ligne 3, 3a, 3b dans la partie supérieure de la calandre 10 d'un échangeur 1, 1a, 1b comportant une vanne 30, 30a, 30b permet d'amener de l'air dans la calandre 10.

Enfin, il est prévu des capteurs de pression 40, 41 respectivement en entrée 13 et en sortie 14 de la calandre 10 d'un échangeur 1.

Afin d'éliminer les goudrons présents dans le gaz de synthèse brut, on réalise dans le procédé les étapes suivantes :
a/ introduction par l'entrée 13, 13a ou 13b et refroidissement du gaz brut à l'intérieur de la calandre 10, 10a ou 10b, d'un échangeur 1, 1a ou 1b de sorte à condenser au moins une partie des goudrons contenus dans le gaz sur les surfaces internes à 1a calandre;
b/ récupération en sortie 14, 14a ou 14b de la calandre 10, 10a ou 10b, du gaz dépourvu de la partie des goudrons condensée;
c/ arrêt de l'introduction du gaz brut selon l'étape a/ ;
d/ régénération de l'intérieur de la calandre 10, 10a ou 10b avec combustion afin de brûler au moins la partie des goudrons condensée et présente sur les surfaces internes à la calandre 10, 10a ou 10b.

Le système I comprenant au moins deux échangeurs de chaleur 1a, 1b identiques, représenté en figure 2 permet de mettre en oeuvre le procédé en continu.

Ainsi, sur cette figure 2, lorsque l'échangeur 1a met en oeuvre l'étape a/ permettant la condensation des goudrons, l'autre échangeur 1b met en oeuvre l'étape d/ de régénération avec au moins la combustion de l'intérieur de la calandre 10b.

Autrement dit, le système en continu selon la figure 2, permet à la fois de :
- fournir le gaz de synthèse brut alternativement à chaque entrée 13a ou 13b de calandre 10a ou 10b d'échangeur,
- fournir alternativement l'air par la ligne 3 dans chaque calandre 10a ou 10b d'échangeur pendant la phase de combustion des goudrons,
- fournir alternativement si besoin un appoint de gaz de pyrolyse ou de synthèse pour la combustion des goudrons,
- déclencher une combustion dans chaque calandre 10a ou 10b d'échangeur.

Ainsi, avec le système en continu, on peut intégrer le procédé de purification par destruction des goudrons selon l'invention dans un procédé de conversion par pyrolyse et/ou par gazéification sans introduire de discontinuité dans ce dernier.

Les inventeurs ont d'ores et déjà réalisé le dimensionnement d'un système selon l'invention dans une installation de biogaz produit par pyrolyse à partir de déchets constitués par des boues de STEP (Station d'Epuration).

Ainsi, à titre d'exemple, le réacteur de pyrolyse envisagé peut produire un gaz de pyrolyse assez chargé en goudrons, environ 15 g/Nm3 de gaz de synthèse brut produit.

Les compositions estimées pour le gaz de synthèse brut obtenu sont indiquées dans le tableau suivant.

| Composé | Concentration (%vol) |
|---|---|
| H₂ | 20,6 |
| CO₂ | 10,4 |
| CO | 22,7 |
| CH₄ | 9,1 |
| H₂S | 0,7 |
| C₂+C₃ | 2,1 |
| C₆H₆+C₇H₈ | 0,6 |
| Goudrons | 0,3 |
| H₂O | 22 |
| NH₃ | 11,2 |
| Volume gaz | 0,8 Nm³/kg |
| Cendres | 25% |
| Goudrons Condensables | 14 gramme/Nm³ |

Le gaz de synthèse brut peut être produit entre 700°C et 950°C et doit être refroidi vers 50°C pour être purifié conformément à l'invention.

L'installation d'essai à l'échelle pilote est dimensionnée à 34 kg/h de boues de STEP (23 kg de matière organique par heure) et peut produire une quantité égale à 18 Nm³/h de gaz de pyrolyse sec (avec 0,8 Nm³/h de gaz par kg de matière organique) ou 23 Nm³/h de gaz de pyrolyse humide. Ainsi, le gaz de synthèse brut obtenu peut contenir 320 grammes de goudrons par heure, soit un pouvoir calorifique 30 MJ/kg susceptible de produire une puissance thermique de 2,7 kW en moyenne.

Ainsi, pour réaliser la condensation des goudrons selon l'invention, il est nécessaire de prévoir une surface de 2,1 m², soit un coefficient d'échange de 50 W/m²/K.

Le débit d'eau de refroidissement nécessaire est 100 kg/h et l'eau est chauffée de 30°C à 116°C (5 bar).

Un échangeur de chaleur 1 contient alors un nombre de 17 tubes de 2 mètres de long et d'un diamètre extérieur de 2 centimètres.

L'invention est applicable à tout gaz de synthèse brut issu de la pyrolyse et/ou gazéification de tout type de charges de matière carbonée (charbon, pet coke, biomasse, déchets organiques, déchets de matière plastique).

### Préférences citées

[1]: Nair SA, Pemen AJM, Yan K, van Gompel FM, van Leuken HEM, van Heesch EJM, et al. « Tar removal from biomass-derived fuel gas by pulsed corona discharges". Fuel Processing Technology. 2003:84(1-3):161-73;
[2]: Higman C, Burgt Mvd. "Gasification". Burlington, MA, USA: Gulf Professional Publishing, 2003.
[3]: Boerrigter H, Bolhár-Nordenkampf M, Deurwaarder EP, Eriksson T, Könemann JW, Rauch R, et al. "OLGA Optimum". Petten, Netherlands: ECN; 2006.
[4]: Phuphuakrat T, Namioka T, Yoshikawa K. "Absorptive removal of biomasse tar using water and oily materials". Biorssource Technology. 2011;102(2):543-9.
[5]: Phuphuakrat T, Namioka T, Yoshikawa K. "Tar removal from biomass pyrolyses gas in two-step function of decomposition and adsorption". Applied Energy. 2010; 87(7): 2203-11.
[6]: Gerber MA. "Review of Novel Catalysts for Biomass Tar Cracking and Methane Reforming". Richland, Washington, USA: Pacific Northwest National Laboratory; 2007.
[7]: Samsudin Anisa, Z.A. Zainala, "Tar reduction in biomasse producer gas via mechanical, catalytic and thermal methods: A review" Renewable and Sustainable Energy Reviews 15 (2011) 2355-2377.

## Revendications

1. Procédé de purification d'un gaz de synthèse brut issu d'une pyrolyse et/ou d'une gazéification d'une charge de matière carbonée par destruction d'au moins une partie des goudrons contenus dans le gaz, comprenant les étapes suivantes :
a/ introduction et refroidissement du gaz brut à l'intérieur de l'enceinte étanche (10, 10a, 10b), dite calandre, d'un échangeur (1, 1a, 1b) de chaleur à tubes et à calandre de sorte à condenser au moins une partie des goudrons contenus dans le gaz sur les surfaces internes à la calandre ;
b/ récupération en sortie (14, 14a, 14b) de la calandre, du gaz dépourvu de la partie des goudrons condensée;
c/ arrêt de l'introduction du gaz brut selon l'étape a/ ;
d/ régénération de l'intérieur de la calandre comportant au moins une:
d1/ combustion afin de brûler au moins la partie des goudrons condensée et présente sur les surfaces internes à la calandre; le fluide de refroidissement circulant dans le faisceau de tubes selon l'étape a/ étant de préférence de l'eau ;
l'arrêt c/ étant provoqué par une mesure de la perte de charge du gaz entre l'entrée (13, 13a, 13b) et la sortie (14, 14a, 14b) de la calandre au-dessus d'une valeur seuil prédéterminée.

2. Procédé de purification selon la revendication 1, la régénération d/ comportant une étape de vidange, de préférence par gravité, de l'eau contenant le cas échéant des cendres solubles, et accumulée lors de la condensation dans la calandre.

3. Procédé de purification selon l'une des revendications précédentes, la régénération d/ comportant une étape d'1/ d'introduction d'un gaz comburant dans la calandre au préalable de la combustion d1/ le gaz comburant comportant de préférence de l'air et/ou du gaz brut issu de la pyrolyse ou de la gazéification.

4. Procédé de purification selon l'une des revendications précédentes, la combustion d1/ étant déclenchée par une mise à feu, la mise à feu étant de préférence réalisée par un chauffage depuis l'extérieur de la calandre.

5. Procédé de purification selon l'une des revendications précédentes, la régénération d/ comportant une étape d2/ de mesure du taux de CO₂ présent dans les gaz issus de la combustion d1/ à la sortie de la calandre, avec arrêt de la combustion d1/ lorsque le taux de CO₂ mesuré est inférieur à une valeur seuil prédéterminée.

6. Procédé de purification selon l'une des revendications précédentes, l'échangeur de chaleur étant de type à contre-courant.

7. Procédé de purification selon l'une des revendications précédentes, la régénération d/ comportant une étape d3/ de nettoyage à l'eau de l'intérieur de la calandre après la combustion d1/.

8. Procédé de purification selon l'une des revendications précédentes, comportant une étape e/ de récupération, à la sortie (16, 16a, 16b) de l'échangeur, de la chaleur émise par le fluide circulant dans les tubes pendant la condensation a/, et de préférence une étape f/ de récupération, à la sortie (16, 16a, 16b) de l'échangeur, de la chaleur émise par le fluide circulant dans les tubes pendant la combustion d1/.

9. Procédé de purification selon l'une des revendications précédentes, réalisé en continu par mise en oeuvre des étapes a/ à d/ dans chacun de deux échangeurs à tubes (1a, 1b) et à calandre à partir d'un même gaz brut, avec des étapes a/ et b/ réalisées dans l'un (1a) des deux échangeurs à tubes pendant qu'une étape d/ est réalisée dans l'autre (1b) des deux échangeurs et vice-versa.

10. Procédé de conversion thermochimique d'une charge de matière carbonée par pyrolyse ou gazéification, comportant une étape de purification du gaz brut de synthèse issu de la pyrolyse ou la gazéification conformément au procédé selon l'une quelconque des revendications précédentes, de l'eau chaude ou de la vapeur d'eau récupérée en sortie (16, 16a, 16b) des tubes d'échangeur étant de préférence, valorisée dans une autre étape du procédé de conversion;
le gaz dépourvu de la partie des goudrons condensée, récupéré selon l'étape b/ étant de préférence injecté dans la charge de matière carbonée avant la pyrolyse ou la gazéification.

11. Système (I) destiné à mettre en oeuvre le procédé en continu selon la revendication 10, comprenant :
- au moins deux échangeurs (1a, 1b) de chaleur à tubes et à calandre,
- des moyens pour fournir le gaz de synthèse brut alternativement à chaque entrée (13a, 13b) de calandre d'échangeur,
- des moyens pour fournir alternativement un gaz comburant dans chaque calandre (10a, 10b) d'échangeur,
- des moyens pour déclencher une combustion dans chaque calandre d'échangeur,
- au moins un capteur de pression (40, 41) pour mesurer la différence de pression entre l'entrée de calandre d'échangeur et la sortie de calandre d'échangeur.

12. Système (I) selon la revendication 11, comprenant des moyens de nettoyage à l'eau de la calandre de chaque échangeur.

13. Système (I) selon la revendication 11, comprenant au moins un capteur de mesure du CO₂ en sortie d'une calandre d'échangeur.

14. Installation de conversion thermochimique d'une charge de matière carbonée comportant :
- un gazéifieur (1) ou un réacteur de pyrolyse,
- un système selon l'une des revendications 11 à 13, l'entrée de la calandre de chaque échangeur étant reliée à la sortie du gazéifieur ou du réacteur de pyrolyse.

## Patentansprüche

1. Verfahren zum Reinigen eines Syntheserohgases aus einer Pyrolyse und/oder einer Vergasung einer Charge karbonisierten Materials, durch Zerstörung wenigstens eines Teils des in dem Gas enthaltenen Teers, mit den folgenden Schritten:
a/ Einleiten und Kühlen des Rohgases im Inneren eines als Kalander bezeichneten dichten Behältnisses (10, 10a, 10b) eines Wärmetauschers (1, 1a, 1b) mit Rohren und Kalandern, derart, dass wenigstens ein Teil des in dem Gas enthaltenen Teers an den inneren Oberflächen des Kalanders kondensiert;
b/ Zurückgewinnen des von dem kondensierten Teil des Teers befreiten Gases am Auslass (14, 14a, 14b) des Kalanders;
c/ Beenden der Einleitung des Rohgases gemäß Schritt a/;
d/ Regeneration des Inneren des Kalanders, umfassend wenigstens eine:
d1/ Verbrennung, um wenigstens den Teil des kondensierten Teers zu verbrennen, der auf den inneren Oberflächen des Kalanders vorhanden ist; wobei das Kühlfluid, das gemäß Schritt a/ in dem Bündel der Rohre zirkuliert, vorzugsweise Wasser ist;
wobei das Beenden c/ ausgelöst wird durch eine Messung eines Druckverlustes des Gases zwischen dem Einlass (13, 13a, 13b) und dem Auslass (14, 14a, 14b) des Kalanders oberhalb eines vorbestimmten Schwellenwertes.

2. Verfahren zur Reinigung nach Anspruch 1, bei dem die Regeneration d/ einen Schritt der Entleerung, vorzugsweise durch Schwerkraft, von Wasser umfasst, das gegebenenfalls lösliche Asche enthält und sich bei der Kondensation in dem Kalander gesammelt hat.

3. Verfahren zur Reinigung nach einem der vorstehenden Ansprüche, bei dem die Regeneration d/ einen Schritt der Einleitung eines verbrennungsfördernden Gases in den Kalander vor der Verbrennung d1/ umfasst, wobei das verbrennungsfördernde Gas vorzugsweise Luft und/oder Rohgas aus der Pyrolyse oder der Vergasung enthält.

4. Verfahren zur Reinigung nach einem der vorstehenden Ansprüche, bei dem die Verbrennung d1/ durch eine Zündung ausgelöst wird, wobei die Zündung vorzugsweise durch Beheizung von außerhalb des Kalanders bewirkt wird.

5. Verfahren zur Reinigung nach einem der vorstehenden Ansprüche, bei dem die Regeneration d/ einen Schritt d2/ der Messung des Gehalts an CO₂, das in den aus der Verbrennung d1/ stammenden Gasen enthalten ist, am Auslass des Kalanders umfasst, mit Beenden der Verbrennung d1/, wenn der gemessene Gehalt an CO₂ unterhalb eines vorbestimmten Schwellenwertes liegt.

6. Verfahren zur Reinigung nach einem der vorstehenden Ansprüche, bei dem der Wärmetauscher ein Gegenstrom-Wärmetauscher ist.

7. Verfahren zur Reinigung nach einem der vorstehenden Ansprüche, bei die Regeneration d/ einen Schritt d3/ der Reinigung des Inneren des Kalanders mit Wasser nach der Verbrennung d1/ umfasst.

8. Verfahren zur Reinigung nach einem der vorstehenden Ansprüche, mit einem Schritt c/ der Zurückgewinnung der Wärme, die während der Kondensation a/ von dem in den Rohren zirkulierenden Fluid abgegeben wird, am Auslass (16, 16a, 16b) des Wärmetauschers, sowie vorzugsweise einem Schritt f/ der Rückgewinnung der Wärme, die von dem während der Verbrennung d1/ in den Rohren zirkulierenden Fluid abgegeben wird, am Auslass (16, 16a, 16b) des Wärmetauschers.

9. Verfahren zur Reinigung nach einem der vorstehenden Ansprüche, fortlaufend ausgeführt durch Ausführen der Schritte a/ - d/ in jedem von zwei Wärmetauschern mit Rohren (1, 1a, 1b) und Kalandern mit demselben Rohgas, wobei die Schritte a/ und b/ in einem (a) der beiden Röhrenwärmetauscher ausgeführt werden, während ein Schritt d/ in dem anderen (1b) der beiden Wärmetauscher ausgeführt, und umgekehrt.

10. Verfahren zur thermochemischen Umwandlung einer Charge karbonisierten Materials durch Pyrolyse oder Vergasung, mit einem Schritt der Reinigung des aus der Pyrolyse oder der Vergasung stammenden Syntheserohgases gemäß einem Verfahren nach einem der vorstehenden Ansprüche, wobei das heiße Wasser oder der Wasserdampf, das oder der am Auslass (16, 16a, 16b) der Wärmetauscherrohre zurückgewonnen wird, vorzugsweise in einem anderen Schritt des Umwandlungsverfahrens wiederverwertet wird;
wobei das von dem Teil des kondensierten Teers befreite Gas, das in Schritt b/ zurückgewonnen wird, vorzugsweise vor der Pyrolyse oder Vergasung in die Charge des karbonisierten Materials injiziert wird.

11. System (1), das dazu bestimmt ist, das kontinuierliche Verfahren nach Anspruch 10 auszuführen, mit:
- wenigstens zwei Wärmetauschern (1a, 1b) mit Rohren und Kalandern,
- Mitteln zum Zuführen des Syntheserohgases abwechselnd zum Einlass (13a, 13b) jedes Kalanders der Wärmetauscher,
- Mitteln zum abwechselnden Bereitstellen eines verbrennungsförderndes Gases in jedem Kalander (10a, 10b) der Wärmetauscher,
- Mitteln zum Auslösen einer Verbrennung in jedem Kalander der Wärmetauscher,
- wenigstens einem Druckaufnehmer (40, 41) zur Messung der Druckdifferenz zwischen dem Einlass des Kalanders des Wärmetauschers und dem Auslass des Kalanders des Wärmetauschers.

12. System (1) nach Anspruch 11, mit Mitteln zur Reinigung des Kalanders jedes Wärmetauschers mit Wasser.

13. System (1) nach Anspruch 11, mit Mitteln zur Messung der Menge an CO₂ am Auslass eines Kalanders eines Wärmetauschers.

14. Installation zur thermochemischen Umwandlung einer Charge karbonisierten Materials, mit
- einem Vergaser (1) oder eine Pyrolysereaktor,
- einem System nach einem der Ansprüche 11 bis 13, bei dem der Einlass des Kalanders jedes Wärmetauschers am Auslass des Vergasers oder Pyrolysereaktors gebildet ist.

## Claims

1. Method for purifying a raw synthesis gas originating from the pyrolysis and/or gasification of a carbonised material charge by destruction of at least a part of the tars contained in the gas, comprising the following steps:
a/ introducing and cooling the raw gas inside the sealed enclosure (10, 10a, 10b), called a shell, of a shell and tube heat exchanger (1, 1a, 1b) so as to condense at least a part of the tars contained in the gas on the internal surfaces of the shell;
b/ recovering the gas without the condensed part of the tars at the outlet (14, 14a, 14b) of the shell;
c/ stopping introduction of the raw gas according to step a/:
d/ regenerating the inside of the shell, comprising at least one:
d1/ combustion in order to burn at least the condensed part of the tars present on the internal surfaces of the shell; the cooling fluid circulating in the bundle of tubes according to step a/ preferably being water;
stoppage c/ being caused by a measurement of the loss of charge of the gas between the inlet (13, 13a, 13b) and the outlet (14, 14a, 14b) of the shell being above a pre-determined threshold value.

2. Purification method according to claim 1, regeneration d/ comprising a step emptying, preferably by gravity, the water containing soluble ashes that accumulated during condensation in the shell, if necessary.

3. Purification method according to one of the previous claims, regeneration d/ comprising a step d'1/ introducing an oxidising gas into the shell before combustion d1/ the oxidising gas preferably comprising air and/or raw gas originating from pyrolysis or gasification.

4. Purification method according to one of the previous claims, combustion d1/ being started by setting alight, setting alight preferably being carried out by heating the shell from the outside.

5. Purification method according to one of the previous claims, regeneration d/ comprising a step d2/ measuring the level of CO₂ present in the gases originating from combustion dl/ at the outlet of the shell, with stoppage of combustion d/l when the level of CO₂ measured is less than a pre-determined threshold value.

6. Purification method according to one of the previous claims, the heat exchanger being of the counter-current type.

7. Purification method according to one of the previous claims, regeneration d/ comprising a step d3/ cleaning the inside of the shell with water after combustion d1/.

8. Purification method according to one of the previous claims, comprising a step c/ recovering the heat given off by the fluid circulating in the tubes during condensation a/ at the outlet (16, 16a, 16b) of the exchanger and preferably a step f/ recovering the heat given off by the fluid circulating in the tubes during combustion d1/ at the outlet (16. 16a, 16b) of the exchanger.

9. Purification method according to one of the previous claims, carried out continuously by putting steps a/ to d/ into operation in each of two shell and tube exchangers (la, lb), starting from one and the same raw gas, with steps a/ and b/ carried out in one (la) of the two tube exchangers whilst a step d/ is carried out in the other (lb) of the two exchangers and vice-versa.

10. Method for thermochemically converting a carbonised material charge by pyrolysis or gasification, comprising a step purifying the raw synthesis gas originating from pyrolysis or gasification according to the method according to any one of the previous claims, hot water or water vapour recovered at the outlet (16, 16a, 16b) of the exchanger tubes being preferred, which is used in another step of the conversion process:
the gas without the condensed part of the tars that has been recovered according to step b/ preferably being injected into the carbonised material charge before pyrolysis or gasification.

11. System (I) intended to put the continuous method according to claim 10 into operation, comprising:
- at least two shell and tube heat exchangers (la, lb),
- means for supplying the raw synthesis gas alternately to each exchanger shell inlet (13a, 13b).
- means for supplying an oxidising gas alternately in each exchanger shell (10a, 10b),
- means for starting combustion in each exchanger shell,
- at least one pressure sensor (40, 41) for measuring the difference in pressure between the exchanger shell inlet and the exchanger shell outlet.

12. System (1) according to claim 11, comprising means for cleaning the shell of each exchanger with water.

13. System (1) according to claim 11, comprising at least one CO₂ measuring sensor at the outlet of an exchanger shell.

14. Installation for thermochemically converting a carbonised material charge, comprising:
- a gasifier (1) or a pyrolysis reactor,
- a system according to one of claims 11 to 13, the inlet of the shell of each exchanger being connected to the outlet of the gasifier or pyrolysis reactor
